# EUROPEAN PATENT SPECIFICATION

(11) **EP 0 393 437 B1**
(45) Date of publication and mention of the grant of the patent: **28.12.1994**
(21) Application number: 90106606.8
(22) Date of filing: 06.04.1990
(51) Int. Cl.: B60R 16/02, B60J 7/00, B60J 1/20

(54) **Vehicle featuring an auxiliary solar cell electrical system, particularly for powering the air conditioning system of a stationary vehicle**
Fahrzeug, ausgestattet mit einer Solarzellen-Zusatzelektroanlage, insbesondere zum Speisen der Klimaanlage eines stehenden Fahrzeuges
Véhicule comportant un système électrique auxiliaire à cellules photoélectriques en particulier pour l'alimentation du système de climatisation d'un véhicule en stationnement

(30) Priority: 10.04.1989 IT 5300589 U
(43) Date of publication of application: 24.10.1990
(73) Proprietor: FIAT AUTO S.p.A., 10135 Torino (IT)
(72) Inventor: Aragno, Franco, I-10093 Collegno (IT); Piritore, Giuseppe, I-10078 Venaria (IT)
(74) Representative: Jorio, Paolo

(56) References cited:
- EP-A- 0 164 532
- DE-A- 3 524 026
- DE-A- 3 540 353
- DE-A- 3 545 014
- US-A- 4 607 816

## Description

The present invention relates to a vehicle featuring an auxiliary solar cell electrical system, particularly for powering the air conditioning system of the vehicle when parked in the sun, and so reducing the load on the vehicle battery.

German Patent Application DE-A-3 540 353 relates to the use of photovoltaic solar cells as an auxiliary source of electrical energy on motor vehicles. Said system, however, presents two major drawbacks: firstly, it seriously affects the appearance of the vehicle due to the photovoltaic cells being fitted to the external bodywork of the vehicle; and, secondly, the solar cells so arranged are seriously exposed to both damage and weather, thus resulting in rapid wear. Moreover, any attempt to shield the solar cells would not only further impair the appearance of the vehicle, but would also impair streamlining of the vehicle, thus resulting in increased fuel consumption.

The aforementioned problem is solved according to DE-A-3545014, which describes a vehicle according to the preamble of claim 1, in which the vehicle is provided with a sliding, transparent sun-roof having housed therebeneath a rigid panel having the same extension of the sun-roof and slidable independent of the latter, on which panel a set of solar cells is provided for being supported by the panel under the shield of the sun-roof. Such a type of solution, however, involves a large bulk of the sun-roof - solar cell supporting panel assembly, which requires a large housing provided inside the roof for receiving the panel and/or the sun-roof when they are retracted into an open position. Moreover, when the sun-roof is in the retracted position while the supporting panel is in the extracted position, so as to expose the solar cells to the day-light without protection, the opening in the roof of the vehicle results in being closed by the supporting panel, so as outer air cannot enter into the vehicle compartment: on the contrary, the entering of the air leaving the solar cells exposed to the day-light would be a useful feature, specially when the vehicle proceeds at a low speed, in summertime.

The aim of the present invention is to provide a vehicle featuring an auxiliary solar electrical system overcoming the drawbacks of the prior art.

With this aim in view, according to the present invention, there is provided a vehicle having an auxiliary electrical system as defined in Claim 1.

A non-limiting embodiment of the present invention will be described by way of example with reference to the accompanying drawings, in which:
Fig. 1 shows an elevation of a vehicle in accordance with the present invention;
Fig. 2 shows a top plan view of the Fig. 1 vehicle;
Fig. 3 shows a larger-scale section of a detail on the vehicle according to the present invention.

Number 1 in Fig.s 1 to 3 indicates a substantially known type of road vehicle, in the example shown, a car, featuring an auxiliary electrical system 2, particularly for powering any known type of air conditioning system 3 when the vehicle is stationary with the engine off, thus reducing the load on the main energy supply system on the vehicle, usually consisting of any known type of battery 4, which may thus be used exclusively for starting the vehicle engine consisting, for example, of a known type of internal combustion engine (not shown).

Vehicle 1 comprises an engine compartment 5 housing said engine (not shown), said battery 4 and at least part of said system 3; and a passenger compartment 6 housing seats 8 and the remaining part of system 3, in the example shown, at least a ventilation inlet 7. Passenger compartment 6 is defined by a sheet metal body 10 and transparent windows 11 defining the side and rear windows and windscreen of vehicle 1. Said body 10 also comprises a roof panel 12 which, according to the preferred embodiment shown, presents a substantially rectangular through opening 13 normally closed in fluidtight manner by a further transparent window defined, in the non-limiting example shown, by a known type of transparent sun roof 14 sliding, for example, in known manner on rails 15 formed in roof panel 12.

According to the present invention, auxiliary electrical system 2 comprises a sun shade 16 housed in known manner inside passenger compartment 6 for shielding, in known manner, at least one of transparent windows 11 and 14 defining the same; a number of known, e.g. photovoltaic, solar cells 18 partially or totally covering the surface 19 of sun shade 16 facing the window shielded by the same; and means for picking up and distributing the electrical energy produced by solar cells 18 subsequent to sunlight striking sun shade 16 through the window (11 or 14) shielded by the same. In the non-limiting example shown, sun shade 16 is arranged shielding sun roof 14, is fitted in known manner inside roof panel 12, immediately below sun roof 14, and slides in known manner along roof panel 12, for example, along straight rails 21, between a retracted position (not shown) wherein it is housed inside a seat 20 on roof panel 12, thus freeing opening 13 and exposing the glass of sun roof 14, and an extracted position (shown in the accompanying drawings) wherein it occupies the whole of opening 13 beneath sun roof 14, thus shielding the same and so preventing sunlight from penetrating inside passenger compartment 6 through sun roof 14.

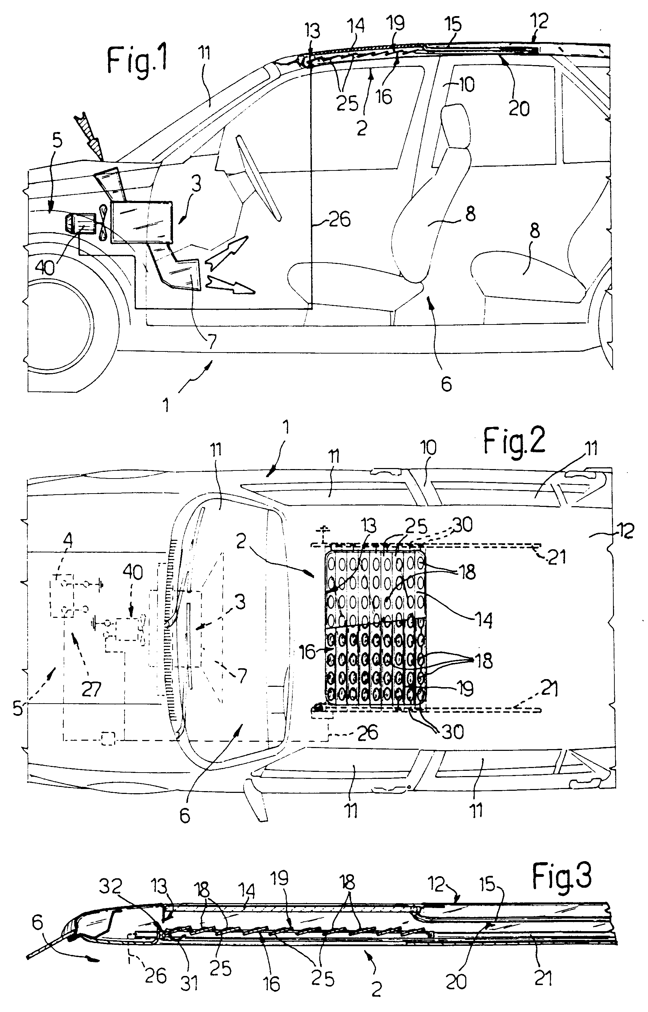

The sun shade 16 is a Venetian blind type comprising a number of strips 25, each supporting a set of solar cells 18 arranged side by side along strips 25, and connected electrically to one another as shown schematically in Fig.2. Solar cells 18 may be fitted to strips 25 in any convenient manner, or formed integral with the same. In either case, the electrical energy produced by solar cells 18 is picked up by electrically connecting the same to at least one electrical cable 26 connected to air conditioning system 3, or directly to a known electrical system 27 on vehicle 1, shown partially and schematically in Fig.2 and of which battery 4 also forms part. For example, cells 18 on each strip 25, which are already connected electrically to each other, may be connected to those on the other strips 25 and to cable 26 via rails 21, by forming the same from electrically conductive material, and by providing strips 25 with respective conductive pads 30 cooperating with rails 21 and each connected to the set of cells 18 on each strip 25. In this case, cable 26 is obviously connected to one of rails 21, while the other rail 21 is grounded. As shown in Fig.3, on the other hand, cells 18 are electrically connected by interconnecting the sets of cells 18 on strips 25 in known manner (not shown), e.g. by means of electrical wires connecting strips 25, and by providing one or more limit contacts 31 on the front edge of opening 13 or elsewhere on roof panel 12, which contacts 31 cooperate with the front edge 32 (provided with conductive portions) of sun shade 16, when this is extracted from seat 20, i.e. shielding sun roof 14. In this case also, one of contacts 31 will obviously be connected to cable 26, while the other will will be grounded.

In both cases, auxiliary electrical system 2 operates as follows. When sun shade 16 is extracted from seat 20 and arranged covering the underside of the glass defining sun roof 14, solar cells 18 are exposed to sunlight and so produce electrical energy. This is picked up by means of cable 26 and employed, for example, for supplying air conditioning system 3, in the example shown, for powering at least an air fan 40 for ventilating passenger compartment 6, and/or for recharging battery 4. When the vehicle is parked in the sun, this therefore provides for air conditioning passenger compartment 6 without reducing the charge of battery 4. In fact, the sunlight striking vehicle 1 provides the energy required for powering fan 40 and so ventilating passenger compartment 6 as if vehicle 1 were in motion. At the same time, sun shade 16 also performs its original function of protecting the occupants inside passenger compartment 6 from sunlight through sun roof 14.

Moreover, and particularly when cable 26 is connected to the rest of system 27, the electrical energy produced by cells 18 may be employed for other purposes, such as for powering audio and/or video equipment on the vehicle. If sufficient energy is produced (which depends on the amount of sunlight, the size of sun roof 14 and the type of cells 18 employed), auxiliary electrical system 2 may also be employed for powering complex air conditioning systems 3, possibly comprising a cooler, in which case, it may also be employed with the vehicle in motion for reducing the load on the engine.

Auxiliary electrical system 2 may obviously feature sun shades (with solar cells 18) arranged differently from the example shown, i.e. those normally employed for shielding the side and/or rear windows of vehicle 1.

Regardless, however, of whether solar cells 18 are fitted to the shade on the sun roof or the other windows defining the passenger compartment, this in no way impairs the advantages afforded by the present invention, which substantially consist in the fact that, when not in use, solar cells 18 are rendered invisible by virtue of sun shade/s 16 being housed in the retracted position inside seat 20, and in the fact that cells 18 are protected at all times by being housed inside passenger compartment 6 or, when is use, by windows 11, 14. Moreover, the present invention involves no impairment in the design of vehicle 1 or in the original function of the vehicle accessories, sun shades and sun roof included.

## Claims

1. A vehicle (1) having an auxiliary electrical system (2), particularly for powering an air conditioning system on the vehicle when stationary, said vehicle (1) comprising: a passenger compartment (6) defined at least partially by transparent windows (11,14), wherein the auxiliary electrical system (2) comprises a sun shade (16) housed inside the passenger compartment (6), said sun shade (16) having a surface (19) faced to at least one (14) of said transparent windows (11,14) for shielding the same, a number of solar cells (18) covering said surface (19), and means (26) for picking up and distributing the electrical energy produced by said solar cells (18) the vehicle (1) further comprising, in combination, means (15) for opening/closing said at least one window (14) independently of said sun shade (16); **characterized** in that said sun shade (16) is of a Venetian blind-type comprising a number of strips (25), each supporting a set of said solar cells (18) arranged side by side along the strip (25), and means to move said strips (25) between a retracted position wherein said strips (25) do not shield the said at least one of said windows (11,14) and an extracted position wherein said strips (25) shield the whole of said at least one window.

2. A vehicle according to claim 1, wherein said vehicle comprises a roof panel (12) having a transparent sun roof (14) sliding along rails (15); said sun shield (16) being arranged so as to shield said sun roof (14), being fitted inside side roof panel (12), immediately beneath said sun roof (14), and being mounted so as to slide along said roof panel (12) between a retracted position wherein said strips (25) are housed inside a seat (20) on said roof panel (12) and do not shield the sun roof (14), and an extracted position wherein said strips (25) shield the whole of said sun roof (14); said strips (25) sliding along straight lateral rails (21) placed beneath said sun roof (14) and being electrically connected to one another.

3. A vehicle (1) according to claim 2, wherein said means for picking up and distributing electrical energy produced by said solar cells (18) comprise said straight lateral rails (21), which are formed form electrically conductive material, and at least an electric cable (26) connectable to an electric system on the vehicle (1).

4. A vehicle (1) according to claim 2, wherein said means for picking up and distributing electrical energy produced by said solar cells (18) comprise a limit contact cooperating with a front edge (32) of said sun shade (16) in said extracted position to shield said window (14), and at least an electric cable (26) connectable to an electric system on the vehicle (1).

## Patentansprüche

1. Fahrzeug (1) mit einer Zusatzelektrik (2), insbesondere zur Versorgung einer Klimaanlage im stehenden Fahrzeug, wobei das Fahrzeug umfaßt:
einen Fahrgastraum (6), der wenigstens teilweise durch durchsichtige Fenster (11, 14) begrenzt ist, bei dem die Zusatzelektrik (2) eine im Inneren des Fahrgastraumes (6) untergebrachte Sonnenblende (16) umfaßt, wobei die Sonnenblende (16) eine wenigstens eines (14) der durchsichtigen Fenster (11, 14) zugewandte Fläche (19) zum Abdunkeln derselben aufweist, eine Anzahl von Solarzellen (18), welche die gesamte Fläche (19) bedecken, und Mittel (26) zum Sammeln und Verteilen der von den Solarzellen erzeugten elektrischen Energie, wobei das Fahrzeug darüber hinaus in Kombination Mittel (15) zum Öffnen/Schließen des wenigstens einen Fensters (14) unabhängig von der Sonnenblende (16) umfaßt,
**dadurch gekennzeichnet**,
daß die Sonnenblende (16) wie eine Jalousie ausgebildet ist mit einer Anzahl von Lamellen (25), von denen jede ein Satz von Solarzellen (18) trägt, die Seite an Seite entlang der Lamelle (25) angeordnet sind, und mit einem Mittel zum Bewegen der Lamellen zwischen einer zurückgezogenen Position, in der die Lamellen das wenigstens eine Fenster (11, 14) nicht abdeckt, und einer ausgezogenen Position, in der die Lamellen (25) das ganze wenigstens eine Fenster abdeckt.

2. Fahrzeug nach Anspruch 1, bei dem das Fahrzeug ein Dach (12) mit einem transparenten Sonnendach (14) aufweist, welches entlang von Schienen (15) gleitet, wobei die Sonnenblende (16) so angeordnet ist, daß sie das Sonnendach (14) abdeckt, und auf der Innenseite des Daches (12) direkt unterhalb des Sonnendaches (14) angebracht und so montiert ist, daß sie entlang des Daches (12) zwischen einer zurückgezogenen Position, in der die Lamellen (25) innerhalb eines Sitzes (20) auf dem Dach (12) untergebracht sind und das Sonnendach (14) nicht bedecken, und einer vorgeschobenen Position gleiten, in der die Lamellen (25) das Sonnendach (14) vollständig bedecken, wobei die Lamellen (25) entlang gerader Seitenschienen (21), die unterhalb des Sonnendaches (14) sitzen, gleiten und elektrisch miteinander verbunden sind.

3. Fahrzeug (1) nach Anspruch 2, bei dem die Mittel zum Sammeln und Verteilen der von den Solarzellen (18) erzeugten elektrischen Energie die geraden Seitenschienen (21), die aus elektrisch leitendem Material bestehen, sowie wenigstens ein elektrisches Kabel (26) umfassen, das mit einer Elektrik im Fahrzeug (1) verbindbar ist.

4. Fahrzeug (1) nach Anspruch 2, bei dem die Mittel zum Sammeln und Verteilen der von den Solarzellen (18) erzeugten elektrischen Energie einen Begrenzungskontakt, der mit einer Vorderkante (32) der Sonnenblende (16) in der ausgezogenen Position, um das Fenster (14) abzudecken, zusammenarbeitet, sowie wenigstens ein elektrisches Kabel (20) umfassen, das mit einer Elektrik im Fahrzeug (1) verbindbar ist.

## Revendications

1. Véhicule (1) ayant un système électrique auxiliaire (2), particulièrement pour l'alimentation d'un système de climatisation du véhicule lorsque celui-ci est en stationnement, ce véhicule (1) comprenant un habitacle (6) délimité au moins en partie par des fenêtres transparentes (11, 14), le système électrique auxiliaire (2) comprenant un pare-soleil (16) placé à l'intérieur de l'habitacle (6), ce pare-soleil (16) ayant une face (19) dirigée vers au moins une (14) des fenêtres transparentes (11, 14) pour masquer celle-ci, un certain nombre de cellules solaires (18) couvrant cette face (19), et des moyens (26) de captage et de distribution de l'énergie électrique produite par ces cellules solaires (18), le véhicule (1) comprenant en outre, en combinaison, un moyen (15) d'ouverture et de fermeture de la ou des fenêtres (14) indépendamment du pare-soleil (16), caractérisé par le fait que le pare-soleil (16) est d'un type jalousie comprenant un certain nombre de lames (25) portant chacune un groupe de cellules solaires (18) placées côte à côte le long de la lame (25), et un moyen pour mouvoir ces lames (25) entre une position rentrée dans laquelle celles-ci ne masquent pas la ou les fenêtres (11, 14) et une position sortie dans laquelle elles masquent la totalité de la fenêtre.

2. Véhicule selon la revendication 1, comprenant un panneau de toit (12) ayant un toit ouvrant transparent (14) glissant le long de glissières (15), le pare-soleil (16) étant placé de façon à masquer ce toit ouvrant (14) et monté à l'intérieur du panneau de toit (12) immédiatement au-dessous du toit ouvrant (14) et de façon à glisser le long du panneau de toit (12) entre une position rentrée dans laquelle les lames (25) sont à l'intérieur d'un siège (20) prévu sur le panneau de toit (12) et ne masquent pas le toit ouvrant (14) et une position sortie dans laquelle les lames (25) masquent la totalité du toit ouvrant (14), les lames (25) glissant le long de glissières latérales rectilignes (21) placées sous le toit ouvrant (14) et étant reliées électriquement les unes aux autres.

3. Véhicule selon la revendication 2, dans lequel les moyens de captage et de distribution de l'énergie électrique produite par les cellules solaires (18) comprennent les glissières latérales rectilignes (21), qui sont en matériau conducteur de l'électricité, et au moins un câble électrique (26) pouvant être connecté à un système électrique du véhicule (1).

4. Véhicule (1) selon la revendication 2, dans lequel les moyens de captage et de distribution de l'énergie électrique produite par les cellules solaires (18) comprennent un contact de fin de course coopérant avec un bord avant (32) du pare-soleil (16) en position sortie pour masquer la fenêtre (14), et au moins un câble électrique (26) pouvant être connecté à un système électrique du véhicule (1).
